(19) Europäisches Patentamt

European Patent Office

Office européen des brevets

(11) **EP 0 868 686 B1**

(12) **FASCICULE DE BREVET EUROPEEN**

(45) Date de publication et mention
de la délivrance du brevet:
**19.09.2001 Bulletin 2001/38**

(51) Int Cl.[7]: **G04G 7/02**

(21) Numéro de dépôt: **95942762.6**

(22) Date de dépôt: **18.12.1995**

(86) Numéro de dépôt international:
**PCT/FR95/01688**

(87) Numéro de publication internationale:
**WO 97/22913 (26.06.1997 Gazette 1997/27)**

(54) **PROCEDE DE DETERMINATION EN TEMPS REEL DE L'ECART DE TEMPS ENTRE STATIONS D'UN SYSTEME DE RADIO-LOCALISATION-NAVIGATION**

VERFAHREN ZUR ECHTZEITFESTSTELLUNG DES ZEITUNTERSCHIEDS ZWISCHEN STATIONEN EINES SYSTEMS ZUR FUNKLOKALISIERUNG UND -NAVIGATION

METHOD FOR THE REAL-TIME DETERMINATION OF A TIME DELAY BETWEEN STATIONS IN A RADIOLOCATION/RADIONAVIGATION SYSTEM

(84) Etats contractants désignés:
**CH DE ES FR GB IT LI NL**

(43) Date de publication de la demande:
**07.10.1998 Bulletin 1998/41**

(73) Titulaire: **CENTRE NATIONAL D'ETUDES SPATIALES**
**F-75039 Paris Cedex 01 (FR)**

(72) Inventeur: **ISSLER, Jean-Luc**
**F-31400 Toulouse (FR)**

(74) Mandataire: **Signore, Robert**
**c/o BREVATOME**
**3, rue du Docteur Lanceraux**
**75008 Paris (FR)**

(56) Documents cités:
- **ALTA FREQUENZA, vol. 51, no. 82, Septembre 1982 - Octobre 1982, MILAN, pages 263-274, XP002011485 E. DETOMA & S. LESCHIUTTA: "The SIRIO-1 timing experiment."**
- **MEASUREMENT TECHNIQUES, vol. 37, no. 1, 1 Janvier 1994, pages 29-34, XP000471137 GUREVICH E L ET AL: "COMPARISON OF REMOTE TIME SCALES BY SATELLITE COMMUNICATIONS CHANNELS METHOD, APPARATUS, AND ERROR"**

## Description

## Domaine technique

La présente invention a pour objet un procédé de détermination en temps réel de l'écart de temps entre stations d'un système de radio-localisation-navigation.

## Etat de la technique antérieure

Un système de radio-localisation-navigation comprend généralement des stations de référence situées au sol et reliées à un centre de traitement. Un ou des satellites assurent une liaison bidirectionnelle entre les stations. Des véhicules (terrestres, aériens, maritimes) équipés de moyens radioélectriques appropriés peuvent être localisés et/ou guidés par référence aux stations.

On connaît ainsi, par exemple, le système dit "Global Positioning System" ou GPS en abrégé, ou sa variante russe GLONASS ou l'avant projet sur le complément européen du système GPS, avant projet dit CE-GPS.

Dans de tels systèmes, les stations au sol contiennent généralement une horloge servant de référence de temps et il est souvent indispensable de connaître l'écart entre les références des différentes stations.

Un moyen connu consiste à utiliser la technique dite du "transfert de temps deux voies" (en anglais "Two-Way Time Transfer"). Cette technique consiste à émettre un signal du type "une impulsion par seconde" (en anglais IPPS pour "One Pulse per Second") d'une station 1 vers une station 2 et ce, à travers un satellite répéteur et à émettre symétriquement de la station 2 vers la station 1. On mesure alors, dans chaque station, l'instant d'émission de l'impulsion propre à la station et l'instant de réception de l'impulsion provenant de l'autre station. Chaque station communique ensuite à l'autre le résultat de ses mesures. Cette communication s'effectue par une liaison quelconque : téléphone, courrier électronique, disque, etc... Chaque station est alors en mesure de calculer l'écart de temps entre les références des stations, écart qui est une fonction simple des résultats de mesure effectués par chacune des stations (en général une demi-somme).

Si ce moyen donne satisfaction à certains égards, il est clair qu'il souffre d'un inconvénient qui est son caractère différé. Chaque station doit attendre de recevoir les informations de l'autre pour entreprendre des calculs et déterminer son écart par rapport à l'autre station. La présente invention a justement pour but de remédier à cet inconvénient en proposant un procédé qui permet de déterminer, en temps réel, l'écart de temps entre stations.

## Exposé de l'invention

Dans les systèmes de radio-localisation-navigation, on connaît une technique dite à étalement de spectre mettant en oeuvre des codes pseudo-aléatoires (en abrégé par la suite "PN" pour "Pseudo-Noise"). On sait qu'un code pseudo-aléatoire est une séquence périodique d'un nombre impair de bits ou "bribes".

L'étalement de spectre consiste à moduler le signal utile par un tel code pseudo-aléatoire, ce dernier ayant un débit binaire élevé par rapport à celui des données, et à moduler ensuite une porteuse par le signal composite obtenu. La mesure de distance des mobiles peut s'effectuer à l'aide de tels codes PN en datant les instants d'émission et de réception d'un événement particulier du code par rapport à l'horloge d'un récepteur de signaux à spectre étalé. Cet événement particulier est le début ou la fin d'une bribe spécifique du code.

Pour cette technique d'étalement de spectre à l'aide de codes pseudo-aléatoires en liaison avec la radio-localisation-navigation, on pourra se reporter à l'ouvrage collectif intitulé "Techniques et technologies des véhicules spatiaux", Tome 1, Cépaduès-Editions, (1994) et spécialement au Module 6 "Localisation spatiale" par Jean-Luc ISSLER, pages 561-634.

Dans une telle technique, on sait synchroniser l'instant de réémission d'un code par le satellite géostationnaire sur une référence de temps (référence GPS ou autre). Pour cela, on décale l'instant d'émission te du code émis dans une station (ce qui, corrélativement, décale d'autant l'instant de réception tr de ce même code dans ladite station), jusqu'à ce que la demi-somme des instants d'émission et de réception (te+tr)/2 soit égale à un instant de référence tref. Cela équivaut à synchroniser l'instant de réémission du satellite sur cette référence.

La relation $\frac{te + tr}{2}$-tref=0 peut être considérée comme une relation d'asservissement car le premier membre n'est autre que le discriminateur d'une boucle de code bord-sol à retard pur, ledit retard étant causé par le temps aller-retour du signal entre la station et le satellite et par le temps de propagation dans la station au sol.

Une variante de cette méthode peut être appliquée si l'on connaît avec précision l'orbite du satellite, et donc la distance D entre la station et le satellite. La relation d'asservissement est donc :te + $\frac{D}{c}$ - $t_{ref}$ = 0 où c est la vitesse de la lumière. La distance D est telle que D=c(tr-te)/2, ceci montrant que les méthodes sont équivalentes, en remplaçant D par son expression dans la relation d'asservissement précédemment citée.

De même, on obtient une variante équivalente en utilisant la relation d'asservissement tr - $\frac{D}{c}$ - $t_{ref}$ = 0.

La présente invention exploite ces techniques d'asservissement ayant pour but de synchroniser un signal de modulation émis par un satellite sur une horloge de référence au sol en les mettant en oeuvre simultanément dans plusieurs stations (dans au moins deux), de telle sorte que l'écart entre les références de deux stations horaires apparaît directement, dans chacune des deux stations, à travers les instants de réception des codes propres aux deux stations. Il n'y a donc plus lieu de transmettre d'une station à l'autre le résultat des mesures pour que chaque station puisse calculer l'écart entre références horaires. La détermination est directe et immédiate.

De façon précise, l'invention a donc pour objet un procédé de détermination en temps réel de l'écart de temps entre plusieurs stations d'un système de radio-localisation-navigation, ce système comprenant en outre un satellite équipé d'un répéteur, ce procédé étant caractérisé par le fait qu'il comprend les opérations suivantes :

a) on produit, dans chaque station, au moins un code pseudo-aléatoire propre à la station, les codes émis par deux stations différentes étant orthogonaux,

b) on émet, depuis chaque station ,le code propre à cette station, à un instant d'émission repéré par rapport à une référence horaire propre à cette station,

c) on reçoit les différents codes émis par les diverses stations dans le satellite et on les réémet en direction desdites stations,

d) on reçoit chaque code réémis par le satellite dans chaque station et on détermine l'instant de réception du code propre à la station par rapport à la référence horaire de la station,

e) dans chaque station on déplace l'instant d'émission du code propre à cette station jusqu'à ce que la demi-somme des instants d'émission et de réception du code propre à la station coïncide avec un instant de référence défini par rapport à la référence horaire de cette station,

f) dans une station quelconque on mesure l'instant de réception du code provenant d'une autre station,

g) dans cette station on détermine ensuite l'écart entre l'instant de réception du code propre à cette station et l'instant de réception du code propre à ladite autre station, cet écart donnant alors, en temps réel, l'écart entre les références horaires de la station en question et de l'autre station.

**Brève description des dessins**

- la figure 1 schématise l'émission et la réception d'un premier code pseudo-aléatoire propre à une première station ;
- la figure 2 schématise l'émission et la réception d'un second code pseudo-aléatoire propre à une seconde station ;
- la figure 3 est un diagramme temporel montrant les instants d'émission et de réception d'un code ;
- la figure 4 est un autre diagramme temporel montrant l'asservissement de l'instant de réémission dans le satellite géostationnaire à un instant de référence,
- la figure 5 est un double diagramme temporel montrant divers instants d'émission et de réception de codes et l'écart de temps entre deux stations,
- la figure 6 est un schéma synoptique d'une station mettant en oeuvre le procédé de l'invention,
- la figure 7 illustre un premier mode de réalisation d'un modem,
- la figure 8 illustre un deuxième mode de réalisation d'un modem,
- la figure 9 illustre un troisième mode de réalisation d'un modem,
- la figure 10 illustre de manière schématique une variante dans laquelle la référence horaire est elle-même sous forme de code pseudo-aléatoire,
- la figure 11 illustre un quatrième mode de réalisation d'un modem.

**Exposé détaillé de modes de réalisation**

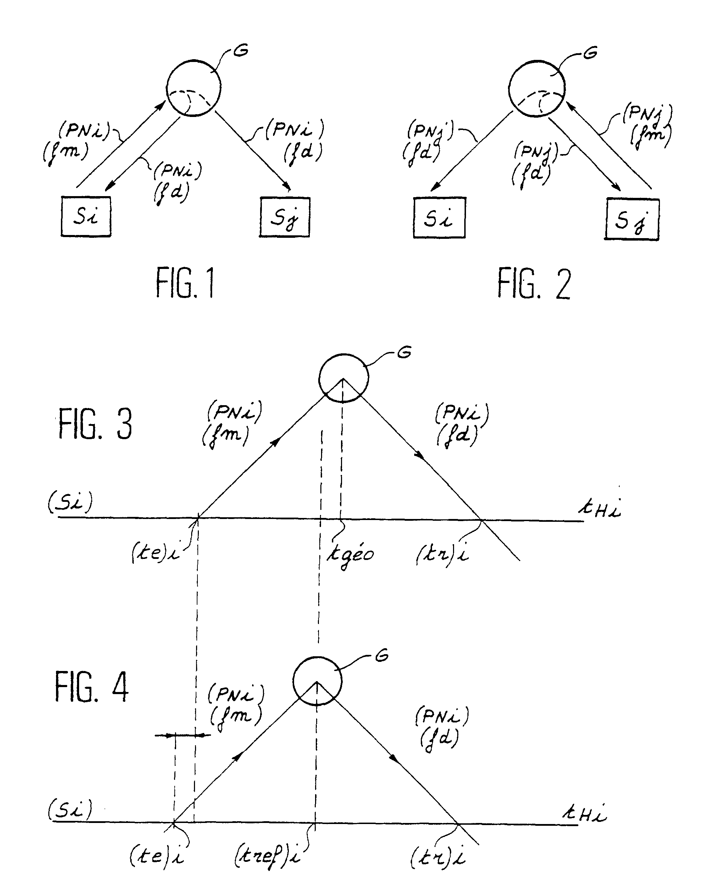

Les figures 1 et 2 schématisent les échanges entre stations dans un même système de radio-localisation-navigation. A titre non limitatif, le système représenté ne comprend que deux stations. Ces stations sont repérées par la lettre S avec un indice i ou j, et les codes pseudo-aléatoires par l'abréviation usuelle PN affectée d'un indice i ou j correspondant à la station qui l'émet. Le satellite géostationnaire, par exemple, est repéré par la lettre G.

Une station $S_i$ quelconque émet un code $PN_i$ vers le satellite en utilisant une porteuse à la fréquence $f_m$ (fréquence dite "montante"). Le satellite G reçoit et ré-émet ce code par une porteuse à la fréquence $f_d$ (fréquence dite "descendante"). Le code $PN_i$ revient vers la station $S_i$ mais est reçu également par les autres stations $S_j$ (figure 1).

De la même manière (figure 2), la station $S_j$ émet une porteuse à la fréquence $f_m$, qui véhicule un code $PN_j$. La porteuse est réémise à la fréquence $f_d$ et le code $PN_j$ revient vers la station $S_j$ et atteint la station $S_i$.

Pour que chaque station puisse distinguer le code qui lui est propre des codes émis par les autres stations, les codes utilisés sont orthogonaux, c'est-à-dire qu'il n'y a pas de corrélation entre un code émis par une station $S_i$ et un code émis par une station $S_j$, lorsque i est différent de j.

Les figures 3,4 et 5 sont des chronogrammes illustrant différents instants d'émission et de réception de codes.

Sur la figure 3, tout d'abord, on voit l'instant d'émission $(t_e)_i$ du code $PN_i$ émis par la station $S_i$. Cet instant est repéré par rapport à une référence horaire $H_i$. Cette référence peut être une horloge au césium ou au rubidium par exemple ou tout autre moyen.

Le code $PN_i$ est réémis par le satellite géostationnaire G à un instant $(t_{géo})_i$ et il est reçu par la station $S_i$ à l'instant $(t_r)_i$.

La figure 4 montre comment asservir ce processus d'émission-réception à un instant de référence (tref)i, toujours défini par rapport à la fréquence horaire Hi. Pour cela, on déplace l'instant d'émission (te)i du code propre à la station jusqu'à ce que la demi-somme 1/2 ((te)i+(tr)i) des instants d'émission (te)i et de réception (tr)i du code PNi coïncide avec l'instant de référence (tref)i. Cela revient à dire que l'instant de réémission (tgéo)i est asservi à (tref)i, puisque (tgéo)i est égal à la demi-somme en question.

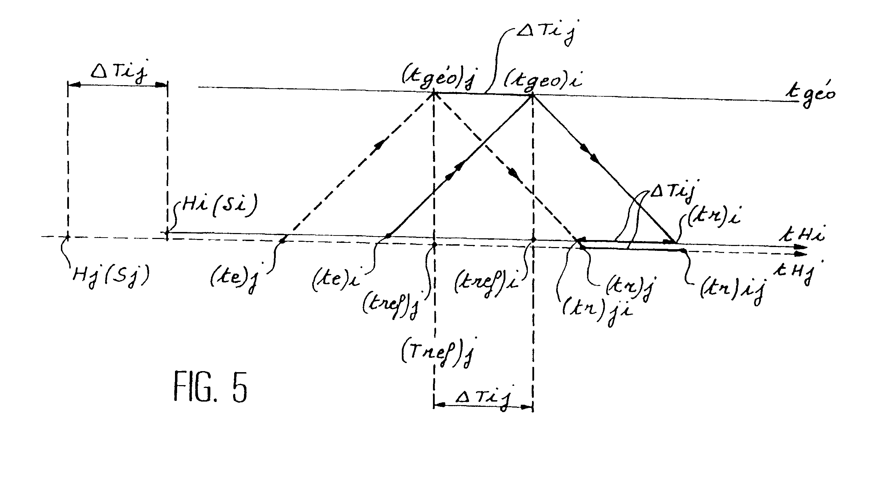

Cet asservissement est réalisé dans chacune des stations. La figure 5 illustre alors le chronogramme des émissions-réceptions dans deux stations quelconques Si,Sj. Chaque instant d'émission (te)i,(te)j a été ajusté pour que les instants de référence (tref)i,(tref)j repérés par rapport aux références horaires Hi,Hj coïncident avec la demi-somme des instants d'émission et de réception, soit 1/2((te)i+(tr)i) d'une part et 1/2((te)j+(tr)j) d 'autre part. Autrement dit, les instants de réémission par le satellite (tgéo)i et (tgéo)j sont asservis à (tref)i et (tref)j.

Si les références horaires Hi et Hj sont décalées l'une par rapport à l'autre d'une quantité ∆Tij, les instants de référence (tref)i et (tref)j le sont de la même quantité, de même que les instants de réception, dans une même station, soit Si, du code propre à cette station et du code propre à l'autre station Sj. La quantité (tr)i-(tr)ji, repérée dans Hi, et la quantité (tr)j-(tr)ij repérée dans Hj, donnent toutes deux directement l'écart ∆Tij entre les références horaires Hi et Hj.

Chaque station peut donc, immédiatement, mesurer l'écart entre sa référence horaire et la référence d'une autre station par simple mesure des instants de réception de son propre code et du code correspondant à l'autre station. Sur la figure 5, cet écart ∆Tij apparaît aussi bien sur l'axe tHi propre à la station Si que sur l'axe tHj propre à la station Sj.

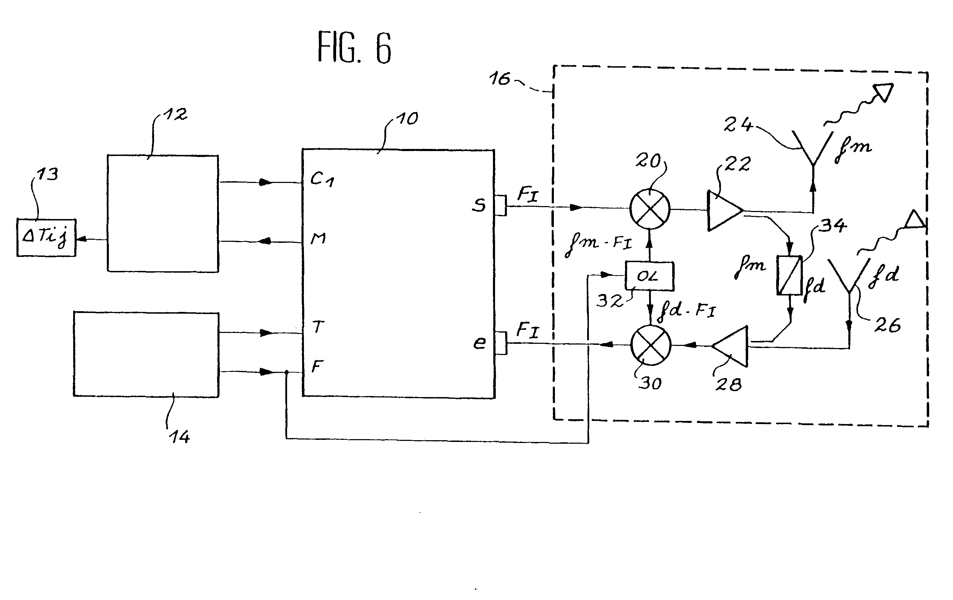

Les figures 6 à 11 illustrent quelques moyens de mise en oeuvre du procédé qui vient d'être décrit.

Sur la figure 6 est représenté le schéma synoptique d'une station. On y trouve un modem (modulateur-démodulateur) 10, du type temps/fréquence, un calculateur 12 avec un module d'affichage de l'écart de temps 13, une référence horaire 14 et un ensemble d'émission-réception 16.

Le calculateur 12 peut être de tout type (?C, station de travail, ...). Les liaisons numériques entre le calculateur 12 et le modem temps/fréquence 10 peuvent être de type RS232 ou RS422 (ou autre). Le logiciel contenu dans le calculateur remplit deux types de fonctions :

-   une fonction première qui est d'asservir le modem comme il a été décrit plus haut,
-   des fonctions annexes comme la mesure de distance entre le modem et le satellite géostationnaire utilisé.

Le calculateur peut également être intégré dans le modem temps fréquence lui-même.

La référence horaire 14 est une horloge de type césium ou rubidium (ou autre). Cette horloge peut être libre ou asservie sur un temps externe (temps UTC, temps GPS, temps GLONASS, ...) L'horloge 14 produit, d'une part, une référence de temps, sous forme d'impulsions électriques périodiques, de type PPS ("Impulsion Par Seconde") et plus généralement de type PPkS ("Impulsion Par k Secondes") et, d'autre part, une référence de fréquence, sous forme de signal électrique de type sinusoïdal ou carré (non limitatif). La fréquence de ce signal est par exemple 10 MHz ou 5 MHz.

Le modem temps/fréquence asservi 10 possède quatre entrées :

-   une entrée C de commande numérique reliée au calculateur,
-   une entrée T de référence de temps reliée à la référence horaire 14,
-   une entrée F de référence de fréquence reliée à la référence horaire 14,
-   une entrée E recevant le signal de fréquence intermédiaire reçu par la station d'émission-réception (code pseudo-aléatoire en fréquence intermédiaire).

Le modem 10 possède par ailleurs deux sorties :

-   une sortie M, qui adresse vers le calculateur le résultat des mesures des instants d'émission te, de réception tr et de référence tref,
-   une sortie S qui délivre un signal en fréquence intermédiaire véhiculant le code pseudo-aléatoire.

Les codes pseudo-aléatoires utilisés peuvent être les codes connus comme C/A-GPS ou C/A GLONASS ou C/A-INMARSAT, ou HARTLE, ou P-GPS, ou P-GLONASS, etc...

L'ensemble d'émission-réception 16 comprend un mélangeur 20, un amplificateur d'émission 22, une antenne d'émission 24 travaillant à la fréquence montante fm, une antenne de réception 26 travaillant à la fréquence descendante fd, un amplificateur de réception 28, un mélangeur 30, un oscillateur local 32 recevant la fréquence émise par la référence horaire 14 et délivrant deux signaux aux fréquences fd-FI et fm-fI dirigés respectivement vers les mélangeurs 20 et 30 et enfin un translateur de fréquence 34 recevant une partie du signal d'émission à la fréquence fm et délivrant un signal à la fréquence fd combiné ensuit au signal de réception. Ce translateur de fréquence fm/fd, placé entre les deux antennes, est utilisé à des fins de calibration globale (mesure de la somme des temps de propagation dans la voie émission, dans la voie réception).

L'ensemble d'émission 16 travaille à trois fréquences :

- une fréquence FI qui est la fréquence intermédiaire des signaux en interface avec le modem. Les valeurs possibles pour cette fréquence intermédiaire peuvent être soit la fréquence normalisée 70 MHz, soit l'une des fréquences des signaux L1 ou L2 du système GPS ou GLONASS, soit 1575,42 MHz ou 1227,60 MHz, pour le système GPS,

- une fréquence fm qui est la fréquence du signal montant vers le répéteur en orbite, obtenue après mélange avec le signal de sortie du modem en FI,

- une fréquence fd qui est la fréquence du signal descendant du répéteur en orbite.

On observera que si fd=FI, il n'y a pas lieu d'utiliser de mélangeur 30 dans la voie de réception.

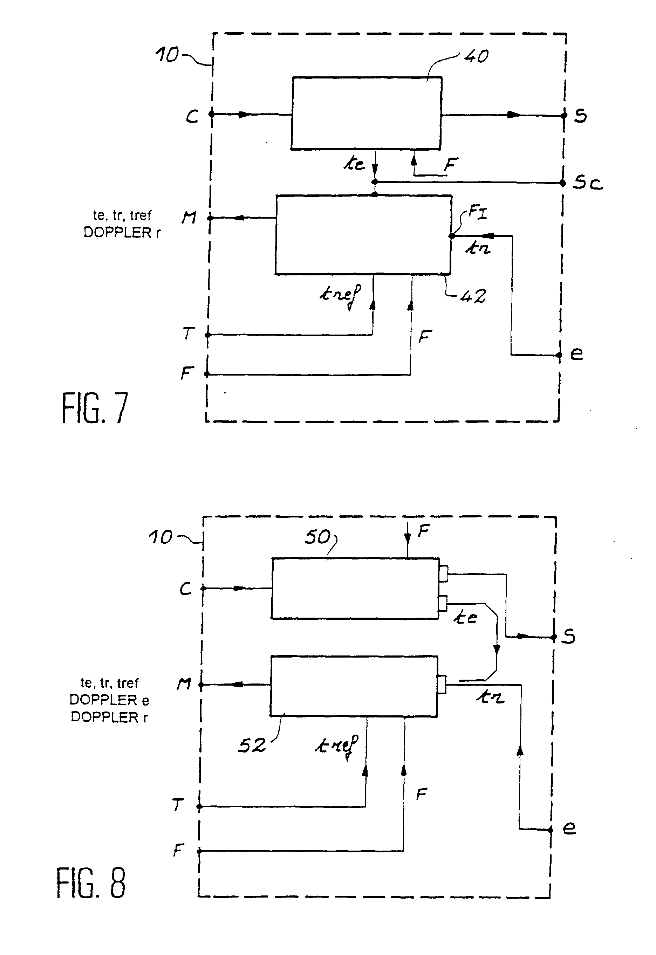

Les figures 7 à 9 illustrent quelques exemples d'architecture de modems temps/fréquence pouvant être utilisés dans l'invention.

Dans la variante de la figure 7, le modem 10 comprend un générateur de signal modulé 40 fonctionnant à la fréquence intermédiaire FI, ce générateur étant placé entre l'entrée C et la sortie S, un récepteur 42 adapté à la modulation utilisée par le générateur 40, ce récepteur étant placé entre l'entrée e et la sortie M ; il reçoit de la référence horaire, par l'entrée T, l'instant de référence tref et, par l'entrée F, la fréquence de référence ; il reçoit, du générateur 40, l'instant d'émission te ; le récepteur adapté 42 reçoit de l'entrée e le signal de réception qui va permettre la détermination de l'instant de réception tr et il délivre à la sortie M les instants te, tr, tref pour le calculateur (ainsi que d'autres informations relatives notamment à des mesures d'effet DOPPLER). Sc est une sortie supplémentaire destinée à la calibration du modem Tf asservi.

Le fonctionnement de ce circuit est schématiquement le suivant.

Le générateur de signal modulé 40 crée en sortie S une porteuse à la fréquence FI modulée par le code pseudo-aléatoire périodique (code PN) sommé à des données numériques organisées sous forme de trames périodiques. Le générateur élabore également un signal électrique te synchrone du code PN présent sur la sortie S.

Le récepteur 42 adapté au code pseudo-aléatoire utilisé par le générateur est muni :

- d'une entrée FI, lui permettant de recevoir le signal radioélectrique,

- de deux entrées destinées à la datation des événements électriques périodiques externes te et tref.

Le récepteur 42 date les événements particuliers reçus : tr, te et tref.

Le modem de la figure 8 comprend un générateur 50 de deux codes pseudo-aléatoires PNi et PMi' orthogonaux et synchronisés entre eux et un récepteur 52.

Le récepteur 52 reçoit, sur une entrée à la fréquence intermédiaire FI, l'un des codes délivrés par le générateur 50 et le code reçu sur l'entrée e. Il reçoit par ailleurs le signal de référence permettant de dater l'instant tref. Il reçoit enfin la fréquence de référence. Le récepteur 52 date les instants te, tr et tref et transmet ces informations au calculateur par la sortie M (avec éventuellement d'autres informations relatives par exemple à l'effet DOPPLER).

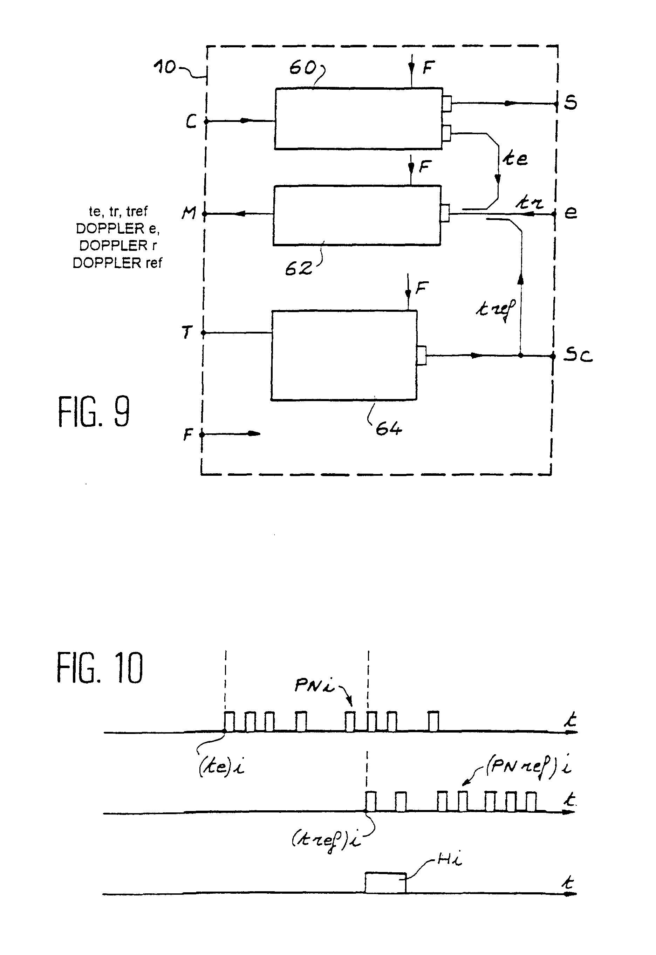

Le modem de la figure 9 contient, comme celui de la figure 8, un générateur 60 de deux codes PN et un récepteur de codes 62. Il contient en outre un générateur 64 de code PN asservi sur la référence de temps. Ce générateur reçoit les impulsions périodiques de la référence de temps et délivre un code PN synchrone. Le récepteur 62 reçoit alors trois signaux radioélectriques, le premier synchrone du code émis et fixant te, le deuxième étant le signal reçu et fixant tr, le troisième synchrone de la référence de temps et fixant tref. Dans une variante, le récepteur 62 ne possède pas d'entrée destinée à la datation d'événements électriques comme dans les variantes des figures 7 et 8.

En liaison avec cette variante de la figure 9, la figure 10 montre, de façon schématique, deux codes pseudo-aléatoires avec leurs successions de bribes à 0 ou à 1. L'un est le code émis PNi (première ligne), l'autre est un code de référence PNref (deuxième ligne) qui sert de référence. Un événement particulier de ces codes, par exemple le front de montée de la première bribe, marque l'instant d'émission ou de référence. La troisième ligne montre une impulsion d'un train périodique produit par l'horloge. Le code de référence PNref est synchrone de cette impulsion.

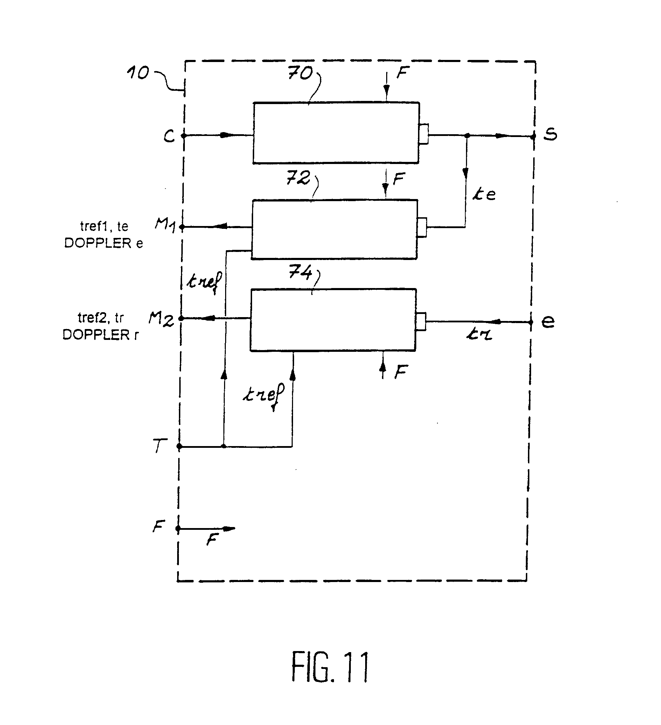

Dans le modem de la figure 11, on en revient à un générateur 70 d'un seul code PN asservi mais on utilise deux récepteurs de codes PN, respectivement 72 et 74. L'un (72) reçoit le signal radioélectrique d'émission et l'autre (74) reçoit le signal radioélectrique de réception. Chacun de ces récepteurs est muni d'une entrée destinée à la datation des événements électriques tref issus de la référence de temps. Le modem possède donc deux sorties M1, M2 délivrant, respectivement, pour M1, une référence de temps tref1, l'instant d'émission te, et éventuellement un effet DOPPLER sur le signal d'émission, et, pour M2, la référence de temps tref2, l'instant de réception tr et un effet DOPPLER sur le signal de réception.

Dans toutes ces variantes de modems, en refermant la sortie S sur l'entrée e, on peut calibrer le modem et tenir compte des retards introduits par les divers circuit.

Les moyens qui viennent d'être décrits peuvent prendre des formes standard dans certains cas. Ainsi, avec une fréquence intermédiaire choisie pour correspondre à la fréquence du signal L1 du système GPS, à savoir 1575,42 MHz, et avec un code pseudo-aléatoire du type C/A GPS ou INMARSAT, les générateurs de code PN en fréquence intermédiaire seront des générateurs classiques GPS et les récepteurs de code PN en fréquence intermédiaire seront également des récepteurs GPS. On rappelle à cet égard que l'on distingue deux catégories de récepteurs :

- les récepteurs GPS dits de navigation sans entrée de datation externe (ce qui correspond à la variante de la figure 10),
- les récepteurs GPS dits "orientés temps" avec entrée de datation externe (ce qui correspond aux variantes des figures 8, 9, 11).

On obtient les mêmes résultats en prenant comme fréquence intermédiaire la fréquence du signal L2 du système GPS (1227,60 MHz) avec un code PN du type C/A GPS ou INMARSAT, ou en prenant la fréquence FL2 du système GLONASS avec un code PN du type C/A GLONASS.

Enfin, en prenant FI=fd=FL1 du système GPS ou FL1 du système GLONASS, il n'y a pas de mélangeur 30 dans la station d'émission/réception (cf figure 6). Par contre, on peut coupler la voie de réception du modem asservi avec une voie de réception des signaux émis par la constellation GPS.

On rajoute ainsi au modem asservi les fonctionnalités d'un récepteur GPS orienté temps.

Enfin, on observera que, dans le cas où le récepteur de code pseudo-aléatoire utilisé présente une architecture telle qu'une bonne cohérence entre le code et la porteuse du signal reçu en fréquence intermédiaire soit nécessaire pour réaliser des mesures correctes et permanentes, un deuxième asservissement doit pouvoir être effectué par le modem asservi qui est un asservissement de la porteuse. Pour cela, on mesure l'effet DOPPLER affectant le signal reçu en fréquence intermédiaire, on en déduit la pseudo-vitesse radiale de la porteuse, soit Vp. On calcule l'effet DOPPLER affectant le code reçu en fréquence intermédiaire pour réaliser la mesure de tr, on en déduit la pseudo-vitesse radiale du code, soit Vc. L'asservissement de porteuse a pour but de décaler la fréquence du signal émis (sortie S) de telle sorte que les effets DOPPLER soient les mêmes (Vc=Vp).

**Revendications**

**1.** Procédé de détermination en temps réel de l'écart de temps entre plusieurs stations (Si), (Sj) d'un système de radio-localisation-navigation, ce système comprenant en outre un satellite (G) équipé d'un répéteur, ce procédé étant **caractérisé par** le fait qu'il comprend les opérations suivantes :

a) on produit, dans chaque station (Si), au moins un code pseudo-aléatoire (PNi) propre à la station (Si), les codes (PNi),(PNj) émis par deux stations différentes (Si), (Sj) étant orthogonaux,

b) on émet, depuis chaque station (Si), le code (PNi) propre à cette station à un instant d'émission (te)i repéré par rapport à une référence horaire (Hi) propre à cette station (Si),

c) on reçoit les différents codes (PNi) émis par les diverses stations (Si) dans le satellite (G) et on les réémet en direction desdites stations (Si),

d) on reçoit chaque code réémis par le satellite (G) dans chaque station (Si), et on détermine l'instant de réception (tr)i du code (PNi) propre à la station (Si) par rapport à la référence horaire (Hi) de la station (Si),

e) dans chaque station (Si), on déplace l'instant d'émission (te)i du code propre à cette station jusqu'à ce que la demi-somme ((te)i+(tr)i)/2 des instants d'émission (te)i et de réception (tr)i du code (PNi) propre à la station (Si) ou la quantité $(te)i - \frac{D}{c}$ ou $(tr)i - \frac{D}{c}$ où D est la distance connue entre la station et le satellite et c la vitesse de la lumière, coïncide avec un instant de référence (tref)i défini par rapport à la référence horaire (Hi) de cette station (Si),

f) dans une station quelconque (Si) on mesure l'instant de réception (tr)j du code provenant d'une autre station (Sj),

g) dans cette station (Si) on détermine ensuite l'écart entre l'instant de réception (tr)i du code (PNi) propre à cette station (Si) et l'instant de réception (tr)ji du code (PNj) propre à ladite autre station (Sj), cet écart ((tr)i-(tr)ji) donnant alors, en temps réel l'écart (ΔTij) entre les références horaires (Hi),(Hj) de la station en question (Si) et de l'autre station (Sj).

**2.** Procédé selon la revendication 1, **caractérisé par** le fait que dans chaque station (Si) on utilise comme référence horaire (Hi) un train d'impulsions périodiques.

**3.** Procédé selon la revendication 2, **caractérisé par** le fait que dans chaque station (Si) on utilise comme instant de référence (tref)i un événement particulier d'un code pseudo-aléatoire (PNref) synchrone des impulsions périodiques constituant la référence horaire (Hi).

**4.** Procédé selon la revendication 3, **caractérisé par** le fait que dans chaque station (Si) on produit deux codes pseudo-aléatoires synchrones (PNi), (PNi') l'un (PNi) étant émis vers le satellite, l'autre (PNi') marquant l'instant d'émission du premier (PNi).

**5.** Procédé selon la revendication 1, **caractérisé par** le fait que dans chaque station (Si) on mesure en outre l'effet DOPPLER affectant le code pseudo-aléatoire (PNi) reçu ainsi que l'effet DOPPLER affectant la porteuse modulée par ledit code pseudo-aléatoire (PNi) et que l'on décale la fréquence de la porteuse jusqu'à ce que les deux effets DOPPLER soient égaux.

## Patentansprüche

1. Verfahren zur Echtzeitfeststellung des Zeitunterschieds zwischen mehreren Stationen (Si), (Sj) eines Systems zur Funklokalisierung und -navigation, wobei dieses System außerdem einen Satelliten (G) umfasst, ausgerüstet mit einem Empfänger, und dieses Verfahren **dadurch gekennzeichnet** ist, dass es die folgenden Operationen umfasst:

   a) man erzeugt in jeder Station (Si) wenigstens einen der Station (Si) eigenen Pseudozufallscode (PNi), wobei die durch zwei verschiedene Stationen (Si),(Sj) ausgesendeten Codes (PNi),(PNj) rechtwinklig sind,
   b) man sendet von dieser Station (Si) den dieser Station eigenen Code (PNi) zu einem Sendezeitpunkt (te)i aus, der in Bezug auf einen zeitlichen Bezugspunkt (Hi) festgelegt ist,
   c) man empfängt die unterschiedlichen, durch die verschiedenen Stationen (Si) gesendeten Codes (PNi) in dem Satelliten (G) und sendet sie wieder aus in Richtung der genannten Stationen (Si),
   d) man empfängt jeden durch den Satelliten (G) wiederausgesendeten Code in jeder Station (Si) und stellt den Empfangszeitpunkt (tr)i des dieser Station (Si) eigenen Codes (PNi) in Bezug auf den zeitlichen Bezugspunkt (Hi) der Station (Si) fest,
   e) man verschiebt in jeder Station (Si) den Sendezeitpunkt (te)i des dieser Station eigenen Codes, bis die Halbsumme ((te)i+(tr)i)/2 der Sende- und Empfangszeitpunkte (te)i und (tr)i des der Station (Si) eigenen Codes (RNi) oder die Größe (te)i-D/c oder (tr)i-D/c, wo D die bekannte Distanz zwischen der Station und dem Satelliten und c die Lichtgeschwindigkeit ist, übereinstimmt mit einem Bezugszeitpunkt (tref)i, festgelegt in Bezug auf den zeitlichen Bezugspunkt (Hi) dieser Station (Si),
   f) man misst in einer beliebigen Station (Si) den Empfangszeitpunkt (tr)j des von einer anderen Station (Sj) stammenden Codes,
   g) man ermittelt anschließend in dieser Station (Si) den Abstand zwischen dem Empfangszeitpunkt (tr)i des dieser Station (Si) eigen Codes (PNi) und den Empfangszeitpunkt (tr)ji des der anderen Station (Sj) eigenen Codes (PNj), wobei dieser Abstand ((tr)i-(tr)ji) dann in Echtzeit den Abstand (ΔTij) zwischen den zeitlichen Bezugspunkten (Hi),(Hj) der fraglichen Station (Si) und der anderen Station (Sj) liefert.

2. Verfahren nach Anspruch 1, **dadurch gekennzeichnet, dass** man in jeder Station (Si) als zeitlichen Bezugspunkt (Hi) einen Zug periodischer Impulse benutzt.

3. Verfahren nach Anspruch 2, **dadurch gekennzeichnet, dass** man in jeder Station (Si) als Bezugszeitpunkt (tref)i ein besonderes Ereignis eines mit den den zeitlichen Bezugspunkt (Hi) bildenden periodischen Impulsen synchronen Pseudozufallcodes (PNref) benutzt.

4. Verfahren nach Anspruch 3, **dadurch gekennzeichnet, dass** man in jeder Station (Si) zwei synchrone Pseudozufallscodes (PNi), (PNi') erzeugt, wobei der eine (PNi) zum Satelliten gesendet wird und der andere (PNi') den Sendezeitpunkt des ersten (PNi) markiert.

5. Verfahren nach Anspruch 1, **dadurch gekennzeichnet, dass** man in jeder Station (Si) außerdem den den empfangenen Pseudozufallscode (PNi) betreffenden Dopplereffekt sowie jenen Dopplereffekt misst, der die durch den genannten Pseudozufallscode (PNi) modulierte Trägerwelle betrifft, und dass man die Frequenz der Trägerwelle verschiebt, bis die beiden Dopplereffekte gleich sind.

## Claims

1. Process for determining the time variation between several stations (Si), (Sj) in a radiopositioning-navigation system in real time, this system also comprising a satellite (G) equipped with a repeater, this process being **characterized by** the fact that it comprises the following operations:

   a) at least one pseudo-noise code (PNi) specific to each station (Si) is produced in the station (Si), the codes (PNi), (PNj) transmitted by two different stations (Si), (Sj) being orthogonal;
   b) the code (PNi) specific to each station (Si) is transmitted from this station at a transmission time (te)i identified with respect to a time reference (Hi) specific to this station (Si);
   c) the various codes (PNi) transmitted by the various stations (Si) are received in the satellite (G) and are retransmitted to the said stations (Si);
   d) each code retransmitted by the satellite (G) is received in each station (Si) and the reception time (tr)i of the (PNi) code specific to the station (Si) is determined with respect to the time reference (Hi) of the station (Si);
   e) in each station (Si), the transmission time (te)i of the code specific to this station is shifted until the half-sum $((te)i+(tr)i)/2$ of the transmission time $(te)i$ and reception time $(tr)i$ of the code $(PNi)$ specific to the station $(Si)$ or the quantity $(te)i-D/c$ or $(tr)i-D/c$, where D is the known distance between this station and the satellite and c is the speed of light, coincides with a reference time $(tref)i$ defined with respect to the time reference $(Hi)$ of this station $(Si)$ ;

f) in an arbitrary station $(Si)$, the reception time $(tr)j$ of the code originating from another station $(Sj)$ is measured;

g) in this station $(Si)$, the difference between the reception time $(tr)i$ of the code $(PNi)$ specific to this station $(Si)$, and the reception time $(tr)ji$ of the code $(PNj)$ specific to the said other station $(Sj)$ is then determined, this difference $((tr)i-(tr)ji)$ then giving the difference $(\Delta Tij)$ between the time references $(Hi)$, $(Hj)$ of the station concerned $(Si)$ and the other station $(Sj)$, in real time.

2.    Process according to claim 1, **characterized by** the fact that a periodic pulse stream is used as the time reference $(Hi)$ in each station $(Si)$.

3.    Process according to claim 2, **characterized by** the fact that the reference time $(tref)i$ used in each station $(Si)$ is a particular event in a synchronous pseudo-noise code $(PNref)$ of periodic pulses forming the time reference $(Hi)$.

4.    Process according to claim 3, **characterized by** the fact that two synchronous pseudo-noise codes $(PNi)$, $(PNi')$ are produced, one $(PNi)$ being transmitted to the satellite, the other $(PNi')$ marking the instant at which the first $(PNi)$ is transmitted.

5.    Process according to claim 1, **characterized by** the fact that in each station $(Si)$, the DOPPLER effect affecting the pseudo-noise code $(PNi)$ thus received is measured, together with the DOPPLER effect affecting the carrier modulated by the said pseudo-noise code $(PNi)$, and that the carrier frequency is offset until the two DOPPLER effects are equal.

FIG. 1

FIG. 2

FIG. 3

FIG. 4

FIG. 5

# FIG. 6

EP 0 868 686 B1

FIG. 7

FIG. 8

FIG. 9

FIG. 10

FIG. 11